# DEMANDE DE BREVET EUROPEEN

(11) **EP 2 639 522 A1**
(43) Date de publication de la demande: **18.09.2013**
(21) Numéro de dépôt: 13305297.7
(22) Date de dépôt: 15.03.2013
(51) Int. Cl.: F24J 2/04

(54) **Système de revêtement de toiture, façade ou autre surface extérieure d'un bâtiment, à transfert thermique**

(30) Priorité: 15.03.2012 FR 1252347
(71) Demandeur: Chauvelot, Jean-Paul, 70000 Echenoz la Méline (FR)
(72) Inventeur: Chauvelot, Jean-Paul, 70000 Echenoz la Méline (FR)

(57) **Abrégé**

Système de revêtement de toiture, façade ou autre surface extérieure d'un bâtiment par des éléments de recouvrement (3, 6, 20), ce système utilisant comme support desdits éléments de recouvrement un ensemble de panneaux (1) en feuille mince comportant des nervures (10) parallèles disposées horizontalement et propres à permettre l'accrochage desdits éléments de recouvrement, les nervures déterminant entre elles des cannelures principales (11). Au moins un conduit de fluide (5) adapté pour être parcouru par un fluide caloporteur est placé entre ledit ensemble de panneaux (1) et lesdits éléments de recouvrement (3, 6, 20) dans au moins certaines desdites cannelures principales et/ou dans des cannelures secondaires (12) parallèles aux dites cannelures principales.

## Description

La présente invention concerne un nouveau système de revêtement de toiture ou de façade à transfert thermique, et plus particulièrement un panneau de support adapté pour un tel système.

On connaît déjà divers systèmes visant à récupérer l'énergie thermique reçue par une toiture, au moyen d'un fluide circulant dans des tuyaux disposés sous ou intégrés avec les éléments de couverture.

US2005/0161074 montre une plaque de support ondulée, pour supporter des panneaux photovoltaïques, avec les ondulations orientées dans la direction de la pente de la toiture. Il est prévu de passer dans les ondulations des tuyaux parcourus par un fluide servant essentiellement de contrôle de température desdits panneaux.

WO 2008/151783 évoque le principe de récupération de la chaleur reçue par une couverture, grâce à des canalisations intégrées dans des profilés qui constituent eux-mêmes les éléments de couverture, et qui peuvent supporter des panneaux photovoltaïques.

Également, FR 2398157 décrit un revêtement de toit ou de façade formé d'éléments en plaques métalliques ayant des arêtes dirigées suivant l'inclinaison du toit ou selon la verticale, et qui comportent des nervures parallèles aux arêtes, dimensionnées précisément pour recevoir un tube traversé par un fluide caloporteur, placé en dessous des dites plaques métalliques qui forment elles-mêmes la surface de couverture.

Ces systèmes sont de réalisation relativement complexe, nécessitent l'utilisation de profilés ou plaques de formes et sections précisément adaptées aux conduits de fluides, impliquent des opérations complexes de mise en place des dits conduits dans les profilés ou plaques, et ne permettent pas d'utiliser des éléments de couverture classiques tels que tuiles, ardoises ou similaires.

Par ailleurs, on connaît aussi par FR2478706 l'utilisation de panneaux en béton allégé destinés à remplacer les chevrons et solives de charpente, et comportant des nervures horizontales, destinées à servir de liteaux de support de tuiles ou autres éléments de couverture. Il est prévu que les gorges formées entre ces nervures permettent d'interposer des canalisations ou des fils électriques entre ces éléments de couverture et lesdits panneaux, ce qui permet d'utiliser directement la face inférieure lisse des panneaux comme plafond de pièces mansardées. Il s'agit là d'un mode de réalisation très particulier d'une toiture, pour une construction neuve ou au moins nécessitant une reconstruction complète de la charpente.

Enfin, on connaît aussi, par FR2244061, un système de couverture en tuiles utilisant comme support de tuile, un produit en feuille ondulée dont les génératrices sont perpendiculaires à la ligne de pente, ce produit comportant des nervures de section propre à assurer l'accrochage des tuiles. Ce système ne prévoit aucun moyen de récupération de l'énergie thermique reçue par les tuiles.

La présente invention a pour but de proposer un dispositif de revêtement de toiture, façade ou autre surface extérieure d'un bâtiment, permettant de récupérer l'énergie thermique reçue par ladite toiture, façade ou autre surface, qui soit de mise en oeuvre aisée, adaptable sur toute charpente ou structure de support classique, neuve ou pré-existante. Tout en permettant de constituer un revêtement autonome, elle vise aussi à permettre d'utiliser des éléments de couvertures classiques, tels que tuiles, ou ardoises, de manière que la toiture finie ait un aspect identique à une toiture sans récupération d'énergie. Les mêmes buts sont recherchés pour une utilisation en façade ou même des surfaces peu inclinées ou horizontales telles que planchers ou similaires, permettant d'utiliser un revêtement classique, par panneaux, bardage, clins, lames, platelages, etc.

Avec ces objectifs en vue, l'invention a pour objet un système de revêtement de toiture, façade ou autre surface extérieure d'un bâtiment par des éléments de recouvrement, **caractérisé en ce que** ce système utilise comme support desdits éléments de recouvrement ou comme éléments de recouvrement, un ensemble de panneaux ou lames en feuille mince comportant des nervures et rainures parallèles, disposées notamment horizontalement ou sensiblement horizontalement, et propres à permettre l'accrochage et la fixation desdits éléments de recouvrement, les nervures déterminant entre elles des rainures ou cannelures principales, et au moins un conduit de fluide adapté pour être parcouru par un fluide caloporteur est maintenu contre ledit ensemble de panneaux ou lames dans au moins certaines desdites rainures ou cannelures principales et/ou dans des rainures ou cannelures secondaires parallèles aux dites cannelures principales.

De manière générale, l'invention permet de combiner de manière particulièrement simple la résistance mécanique des panneaux résultant du nervurage, comme cela est bien connu en soi, avec le supportage des conduits de fluide, et avec l'effet bénéfique du transfert thermique de l'énergie de rayonnement reçue par toute la surface des panneaux et transmise par conduction aux conduits grâce au contact entre panneaux et conduits, en plus de l'énergie reçue directement par lesdits conduits. En fonction des configurations, peut s'ajouter encore un effet d'apport thermique par convexion via l'air circulant entre les panneaux et les éléments de recouvrement.

Selon une disposition particulière, le ou les conduits de fluide sont placés entre ledit ensemble de panneaux et lesdits éléments de recouvrement. Lorsque les panneaux sont utilisés comme éléments de recouvrement, les conduits sont placés entre les panneaux ou lames et l'élément de construction, mur ou toiture, sur lequel les panneaux sont fixés.

L'invention permet ainsi de combiner l'accrochage des éléments de recouvrement et le passage et le soutien des conduits de fluide, par un même support constitué par l'ensemble de panneaux, préférentiellement en tôle métallique nervurée, notamment en acier zingué, aluminium ou similaires, ou encore en matériau composite, fibres de verre, etc.

L'invention permet de supprimer ou au moins fortement réduire, en particulier dans le cas de toitures, l'utilisation de contre-lattes et des liteaux, assurant ainsi une grande rapidité de pose, et donc un gain important sur la main-d'oeuvre.

Les panneaux sont préférentiellement réalisés sous formes de plaques, ou lames, de grandes dimensions, permettant de réduire le nombre de joints entre plaques, et permettant donc d'assurer une meilleure étanchéité. Utilisées en sous-toiture, ces plaques permettent d'apporter une très bonne étanchéité de cette sous-toiture, permettant de réduire le recouvrement des tuiles ou autres matériaux tout en respectant les normes DTU en vigueur. Il en résulte une réduction de la quantité des tuiles, et donc de leur poids. Elles peuvent aussi permettre de supprimer l'écran de sous-toiture. L'étanchéité restant assurée en cas défaut de qualité de tuiles ou tous autres incidents, tempête, grêle, infiltration de neige sous les tuiles, et cela même sur des toitures à faible pente.

Ces plaques ou lames sont autoportantes, l'épaisseur de la feuille mince les constituant, ainsi que les formes, la hauteur, la largeur, et le nombre de nervures et cannelures étant déterminés selon les contraintes de fabrication et des charges, en respectant les normes DTU en vigueur.

Les plaques ou lames peuvent être aisément fixées sur la charpente ou autres éléments de support de bardage, par tous moyens de fixation adéquats, clouage ou vissage, etc.

Dans le cas de l'utilisation en toiture, sous tuiles ou similaires, les nervures étant formées lors de la fabrication du produit en feuille, il en résulte un parallélisme parfait des nervures, obtenu directement et donc sans souci de garder le bon écartement entre liteaux lors de la pose, nécessaire en fonction du pureau désiré, comme cela est le cas lors de la réalisation traditionnelle d'une couverture.

Dans une telle application, outre la possibilité de récupérer l'énergie thermique reçue par une toiture ou une façade comportant le système selon l'invention, un des principaux avantages de l'invention est de remplacer les liteaux selon l'art antérieur, et donc de permettre la couverture par des éléments de couverture traditionnels tels que tuiles, ardoises, lauzes, ou similaires, permettant de conserver l'aspect esthétique souhaité, ou imposé.

Le système selon l'invention permet aussi de fixer aisément tout autre élément de couverture ou de recouvrement de surfaces extérieures de bâtiment, tels que bardage de tous types, panneaux photovoltaïques, etc.

Selon un mode de réalisation, les cannelures principales servent de passage et de support pour les conduits de fluide, et les flancs amont des nervures servent de liteaux pour l'accrochage des éléments de recouvrement, en plus de servir au maintien des conduits. Selon un autre mode de réalisation, les cannelures secondaires servant de passage pour les conduits de fluide sont formées dans le sommet des nervures, entre deux cannelures principales. Cette dernière disposition permet d'adapter les dimensions des cannelures recevant les conduits aux dimensions desdits conduits, pour assurer un meilleur contact entre les conduits et les panneaux, et pour les maintenir à une distance minimale souhaitée des éléments de couverture. Elle permet d'adapter les dimensions en section des nervures aux contraintes de résistance mécanique, notamment en flexion, des panneaux. Ainsi les dimensions des nervures et cannelures principales, et celles des cannelures recevant les conduits, sont indépendantes.

Selon une disposition avantageuse, les cannelures sont conformées de manière à enserrer les conduits. Ceci permet non seulement d'assurer un bon maintien des conduits, sans besoin d'organes de fixation annexes, mais aussi d'assurer un meilleur échange thermique entre les panneaux et les conduits.

Les conduits peuvent être des tuyaux en PVC, cuivre ou autres matériaux, préférentiellement en PER, ayant un diamètre adapté à la profondeur des cannelures qui les reçoivent. Ils seront raccordés, de manière connue en soi, à une installation comportant typiquement un circulateur, un ballon d'expansion, des moyens de régulation etc. Comparativement aux chauffe-eau solaires, le système selon l'invention permet de dissimuler entièrement les conduits. Raccordé à un circuit intérieur de la construction, il permet d'assurer un apport de chaleur, et peut aussi fonctionner comme échangeur de refroidissement, par exemple la nuit en été.

Selon une disposition particulière complémentaire, des ouïes d'aération sont formées dans les arêtes bordant les cannelures, permettant de faciliter la circulation d'air entre les panneaux de support et les éléments de couverture.

Selon d'autres dispositions particulières, les éléments de recouvrement peuvent être fixés par des éléments de fixation sur le sommet ou sur un flan amont des nervures, ou aussi maintenus par des crochets engagés dans des orifices formés dans les arêtes bordant les cannelures ou vers le sommet des nervures.

Selon une autre disposition particulière, les panneaux sont des lames allongées comportant sur leurs bords latéraux des retours pliés et conformés de manière à être jointifs l'un contre l'autre, ou sensiblement jointifs, lorsque les dites lames sont assemblées, lesdits retours constituant les nervures, et les conduits de fluide sont placés dans des cannelures formées sur certains au moins desdits retours. Ce mode de réalisation, particulièrement adapté pour des clins ou plateaux de bardage, présente l'avantage d'assurer un auto-maitien des conduits par le seul assemblage des lames l'une contre l'autre, et permet aussi d'assurer le meilleur contact entre les conduits et la tôle des lames ou panneaux.

L'invention a aussi pour objet un panneau, de support pour un système tel que défini précédemment, **caractérisé en ce qu'il** est réalisé en un matériau en feuille mince, notamment en tôle d'acier, et comporte des nervures ayant un flan amont perpendiculaire ou fortement incliné par rapport au plan général du panneau, et des rainures ou cannelures principales formées entre les dites nervures.

Selon une disposition particulière, le panneau comporte en plus des rainures ou cannelures secondaires formées dans le sommet des nervures, entre deux cannelures principales.

Selon une autre disposition particulière, les rainures ou cannelures, destinées à recevoir les conduits de fluide, sont formées sur des retours latéraux des panneaux.

Selon un mode de réalisation particulier, les panneaux constituent les éléments de recouvrement et sont fixés en façade ou en toiture d'un bâtiment, les conduits de fluide étant alors situés du côté du panneau faisant face au bâtiment, c'est-à-dire dissimulés entre les panneaux utilisés alors comme revêtement extérieur, et le mur ou les éléments de charpente ou d'isolation de toitures. Dans ce cas, les conduits seront préférentiellement fixés sur les panneaux avant mise en place des panneaux sur le bâtiment.

Selon une autre disposition, les cannelures sont conformées de manière à enserrer les conduits, avec une ouverture moins large que le diamètre extérieur des conduits. D'une part, les conduits sont maintenus sur les panneaux, sans besoin d'autres moyens de fixation, et d'autre part, l'échange thermique entre le panneau et les conduits est amélioré par le léger serrage des cannelures autour des conduits, qui favorise le contact entre panneaux et conduit. On notera que, lorsque les conduits sont enserrés dans les cannelures, pour favoriser le contact et les échanges thermiques entre les panneaux ou lames et les conduits, cela permet aussi de ne pas disposer les conduits horizontalement puisqu'alors les conduits sont maintenus serrés contre les panneaux et donc sans risque de déformation ou glissement.

Dans le cas de la mise en place de conduits sur des panneaux comportant des nervures dimensionnées de manière à enserrer les conduits, ceux-ci sont préférentiellement mis en place après avoir cintré temporairement les panneaux pour provoquer un élargissement de l'ouverture des cannelures au moins égal au diamètre des conduits, ce qui facilite la mise en place des conduits, comme on le comprendra mieux par la suite.

D'autres caractéristiques et avantages apparaîtront dans la description qui va être faite de différentes variantes de mise en oeuvre de l'invention.

On se reportera aux dessins annexés dans lesquels :
- la figure 1 est une vue en perspective d'une maison comportant le système selon l'invention,
- la figure 2 est une vue de détail en perspective d'un premier mode de réalisation de l'invention,
- les figures 3 à 8 illustrent différentes variantes de mise en oeuvre de l'invention pour des toitures,
- les figures 9 et 10 illustrent deux variantes de mise en oeuvre de l'invention pour une façade,
- les figures 11 et 12 illustrent deux exemples de réalisation dans lesquels les cannelures sont formées sur des retours latéraux de lames profilées,
- la figure 13 illustre un autre mode de réalisation, où les panneaux nervurés servent aussi de revêtement extérieur,
- la figure 14 illustre une méthode préférée de mise en place des conduits, lorsque ceux-ci sont enserrés dans les cannelures des panneaux nervurés.

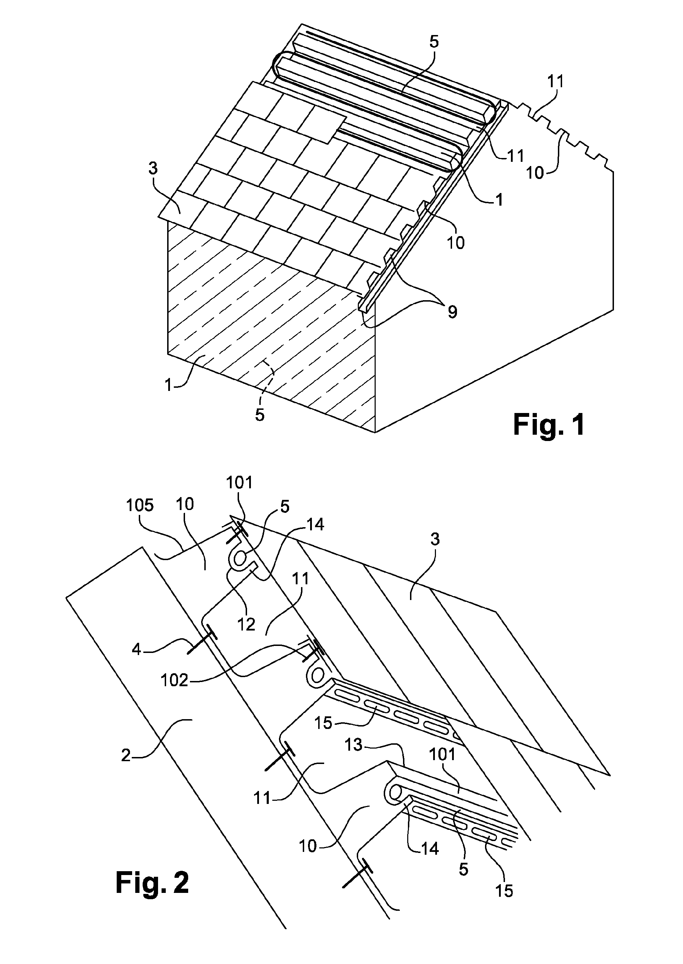

La toiture de la maison représentée figure 1 comporte un ensemble de panneaux en tôle nervurée 1, assemblés de manière étanche entre eux, par exemple par recouvrement de leurs bords, et supportés par les pannes ou chevrons de charpente 2. Du fait des nervures 10 et cannelures 11 de chaque panneau, ceux-ci ont généralement une résistance mécanique suffisante pour supporter sans déformation sensible la charge des éléments de couvertures, tels que les tuiles 3 ou tout autre revêtement.

Les panneaux sont fixés sur les éléments de charpente 2 par des vis 4 ou tout autre organe de fixation adapté. Les nervures et cannelures sont toutes orientées généralement horizontalement, une très légère pente pouvant cependant être utilisée pour faciliter l'évacuation des éventuelles infiltrations ou condensations formées entre les panneaux et les éléments de couverture, et retenues par les nervures. Un couloir 9 en feuille mince de forme et dimensions adaptées est fixé en dessous du bord latéral des panneaux 1 et débouche dans une gouttière, non représentée, pour recevoir et évacuer lesdites condensations ou infiltrations collectées dans les cannelures.

Conformément à l'invention, des conduits de fluide 5 sont disposés dans au moins certaines des cannelures. Ces conduits peuvent être réalisés sous la forme d'un tuyau continu disposé en épingles successives, comme illustré figure 1. On peut aussi utiliser des conduits séparés, reliés ensemble à chaque bord de la toiture. On pourra donc utiliser un arrangement des conduits en série ou en parallèles ou toute combinaison souhaitée de ces arrangements. Les conduits peuvent être notamment en PER et, selon une disposition particulière, leur section sera adaptée pour s'insérer au plus juste dans les cannelures, de manière, d'une part, à y être bien maintenus, et d'autre part à être le mieux possible en contact avec les parois des panneaux, pour améliorer l'échange thermique entre ceux-ci et le liquide circulant dans les conduits.

Par ailleurs, ces conduits sont reliés, de manière connue en soi, à une installation de circulation et de régulation, non représentée.

Les éléments de couverture, tels que les tuiles 3, sont préférentiellement posés sur les panneaux 1 en se servant des nervures 10 comme liteaux, ce qui permet d'utiliser tous les types de couverture classique, montés couramment sur liteaux.

Dans la variante représentée figure 2, les panneaux comportent des cannelures principales 11, ayant une section trapézoïdale de grande dimension, et des cannelures secondaires 12, de plus petite section, formées sur les sommets des nervures 10, qui reçoivent les conduits 5 avec un jeu minimal. Les cannelures de plus grande section permettent d'assurer une plus grande rigidité des panneaux et donc d'utiliser un écartement plus important entre chevrons ou fermettes. Les cannelures secondaires de plus petites dimensions permettent de maintenir les conduits plus proches des tuiles 3.

Les tuiles sont posées en recouvrement de manière classique, accrochées sur l'arête supérieure 13 des nervures.

Dans cette variante, les petites cannelures sont décalées par rapport à l'axe de la nervure 10, c'est-à-dire qu'elles sont formées dans le sommet plat de la nervure 10 de manière à constituer, vers côté supérieur de la nervure, une face plate 101, sur laquelle les tuiles peuvent être fixées par des vis 102. Le côté inférieur forme une arête 14 de faible épaisseur. Des ouïes 15 sont formées dans cette arête 14, et aussi, de manière similaire, dans la partie supérieure, sous l'arête 13, pour permettre un passage d'air entre les panneaux 1 et les tuiles 3.

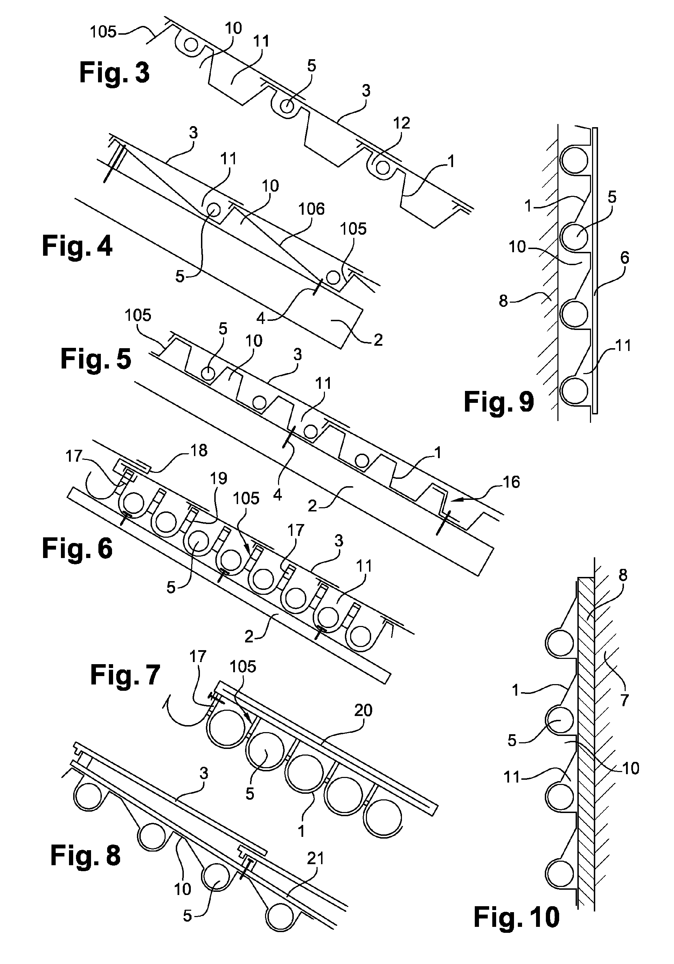

Dans la variante de la figure 3, les cannelures secondaires 12 sont centrées sur les nervures 10.

Dans la variante de la figure 4, les nervures et cannelures ont une section de forme générale triangulaire, avec un flan amont 105 perpendiculaire ou fortement incliné par rapport au plan général du panneau, de manière à former une arête 13 propre à assurer le maintien des tuiles 3, et un flan aval 106 peu inclinées terminant au fond de la cannelure par une partie plate permettant la fixation de cette dernière sur le chevron 2 par des vis 4.

Dans la variante de la figure 5, les nervures 10 et cannelures 11 ont une section trapézoïdale simple, et les conduits sont disposés dans lesdites cannelures 11. On notera que dans cet exemple, les tuiles recouvrent plusieurs cannelures. On notera aussi le raccord en recouvrement 16 entre deux panneaux 1.

Dans la variante de la figure 6, les cannelures sont de forme semi-circulaire, séparées par des nervures sous forme d'arêtes 17 de faible épaisseur jouant le rôle de liteaux. De plus, les tuiles ou ardoises 3 sont maintenues sur ces arêtes 17 par des crochets 18, engagés dans des orifices 19 formés dans lesdites arêtes, qui peuvent aussi jouer le rôle d'ouïes de ventilation.

Dans l'exemple de la figure 7, les panneaux 1 présentent également, comme dans l'exemple précédent, des cannelures semi-circulaires. Cet exemple montre qu'on peut remplacer les tuiles ou ardoises 3 par d'autres éléments de couverture, par exemple des panneaux photovoltaïques 20, qui seront aussi accrochés sur les arêtes 17.

Comme représenté figure 8, des contre-liteaux 21 pourront aussi, au besoin, être vissés sur les nervures, et supporter des liteaux de type courant, pour faciliter la pose d'ardoise ou de tuile dans des configurations particulières.

Reprenant par exemple, mais nullement limitativement, des panneaux avec des cannelures de même profil que l'exemple précédent, on pourra aussi réaliser un habillage de façade, illustré figure 9, où les panneaux 1 sont fixés sur un mur de façade, ou autre élément de construction sensiblement vertical, éventuellement par l'intermédiaire de chevrons 8. Les panneaux de revêtement 6, bardages ou similaires seront fixés directement sur les nervures 10.

La figure 10 illustre un autre mode de réalisation, dans lequel les panneaux nervurés 1 servent aussi d'éléments de recouvrement ou de revêtement. Dans ce cas, les conduits 5 sont placés dans les cannelures du côté du mur 7, les panneaux étant fixés sur des chevrons 8 par vissage des sommets des nervures sur lesdits chevrons.

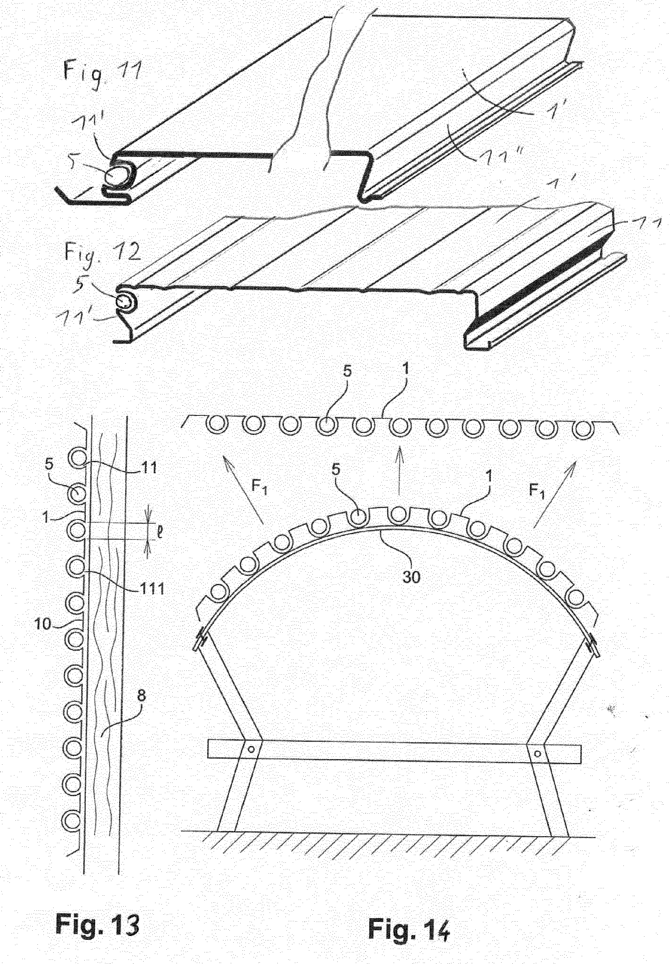

La figure 11 montre une lame allongée, telle qu'un clin par exemple, comportant sur ses bords latéraux des retours profilés 11', 11" de manière à pouvoir s'engager ensemble pour assurer la liaison entre deux lames disposées côte à côte, de manière connue en soi. Sur un de ces retours 11', une cannelure 11 est formée, de forme et dimension adaptée pour y loger un conduit 5 de fluide. Lors de la mise en oeuvre de tels clins, les conduits 5 sont automatiquement enserrés et maintenus dans la cannelure 11 du retour 11' par le retour 11" de la lame adjacente qui vient se placer contre le retour 11'.

La figure 12 illustre le même principe appliqué à une lame de profil légèrement différent.

La figure 13 montre aussi une variante, similaire à celle de la figure 10, où les panneaux 1 servant aussi de revêtement extérieur, sont réalisés par exemple en acier zingué avec un traitement anti-condensation. Dans cette variante, les cannelures 11 sont profilées de manière à enserrer les conduits 5, pour avoir un contact maximum afin d'assurer le meilleur échange thermique possible entre les panneaux et les conduits. Les cannelures ont alors une section sensiblement circulaire, l'ouverture 111 des cannelures ayant une largeur « 1 » inférieure au diamètre des conduits.

Les conduits peuvent être placés entre les panneaux fixés en place et les parois, murs etc, par engagement par les extrémités des cannelures, et ensuite un habillage des extrémités pour dissimuler les conduits.

Toutefois, lorsque les conduits sont serrés dans les cannelures, pour alors faciliter leur mise en place sur les panneaux, on pourra avantageusement utiliser le dispositif représenté figure 14. Il s'agit d'une matrice de support 30 cintrée sur laquelle les panneaux sont disposés, cannelures vers le haut. Le cintrage des panneaux 1 provoque un élargissement de l'ouverture 111 des cannelures, suffisante pour pouvoir y placer aisément les conduits 5. Lorsque le panneau est ramené ensuite dans sa position plane, comme illustré par les flèches F1, les cannelures se referment autour des conduits 5 et les enserrent automatiquement.

Les panneaux dans ces dernières variantes, où ils servent également de revêtement extérieur, pourront être utilisés avec les nervures et cannelures sensiblement horizontales, comme indiqué précédemment, mais pourront aussi être placés avec les nervures inclinées, comme illustré sur le mur de façade à la figure 1, pour un aspect visuel particulier.

Le système représenté figure 13 pourra bien sûr être aussi utilisé en toiture, les conduits étant situés sous les panneaux. La forme des nervures et la méthode de fixation des conduits, telles que décrites ci-dessus étant alors particulièrement avantageuses pour maintenir les conduits sous les panneaux.

Les différentes variantes précitées ne sont que quelques exemples, nullement limitatifs, de mise en oeuvre de l'invention, pour montrer la grande variété possible de panneaux à nervures et cannelures pouvant être utilisés. Dans tous les cas, les conduits de transport de fluide permettront de récupérer la chaleur reçue sur les parois de toiture ou de façade exposées au rayonnement. Ils pourront aussi, inversement procurer un refroidissement lorsque ces parois ne seront pas exposées au rayonnement solaire, soit la nuit, soit du fait de leur orientation, la gestion des flux thermiques pouvant être contrôlé par des systèmes de vannes et de régulation de type connus. On notera incidemment, qu'une telle régulation, par son effet de modulation, permettra aussi de limiter les variations de température en sous-toiture, en particulier au niveau des panneaux, permettant ainsi de supprimer ou au moins réduire les effets, en particulier sonores, des dilatations de ces panneaux.

La forme des nervures et cannelures pourra être différente des exemples montrés sur les dessins, mais sera toujours adaptée pour assurer à la fois la résistance mécanique des panneaux, le soutien des conduits et la fixation des éléments de recouvrement qui, comme déjà indiqués, pourront être de tout type utilisés antérieurement dans des systèmes utilisant une fixation sur liteaux. Enfin, les dimensions et matière des panneaux pourront aussi être adaptées en fonction des besoins, sans être limités à l'utilisation, toutefois préférée, de panneaux en tôle d'acier.

## Revendications

1. Système de revêtement de toiture, façade ou autre surface extérieure d'un bâtiment par des éléments de recouvrement (3, 6, 20), **caractérisé en ce que** ce système utilise comme support desdits éléments de recouvrement ou comme éléments de recouvrement, un ensemble de panneaux (1) ou lames (1') en feuille mince comportant des nervures (10) parallèles propres à permettre l'accrochage et la fixation desdits éléments de recouvrement, les nervures déterminant entre elles des cannelures principales (11), et au moins un conduit de fluide (5) adapté pour être parcouru par un fluide caloporteur est maintenu contre ledit ensemble de panneaux ou lames dans au moins certaines desdites cannelures principales et/ou dans des cannelures secondaires (12) parallèles aux dites cannelures principales.

2. Système de revêtement selon la revendication 1, **caractérisé en ce que** les nervures et les cannelures sont disposées sensiblement horizontalement.

3. Système de revêtement selon la revendication 1, **caractérisé en ce que** les panneaux (1) ou lames (1') sont en tôle métallique nervurée.

4. Système de revêtement selon la revendication 1, **caractérisé en ce que** les éléments de recouvrement (3, 6, 20) sont des tuiles, ardoises, bardage, ou autres éléments de couverture de toiture ou de revêtement de façade similaires.

5. Système de revêtement selon la revendication 1, **caractérisé en ce que** les cannelures principales (11) servent de passage et de support pour les conduits de fluide (5), et les flancs amont (105) des nervures (10) servent de liteaux pour l'accrochage des éléments de recouvrement.

6. Système de revêtement selon la revendication 1, **caractérisé en ce que** les cannelures secondaires (12) servant de passage pour les conduits de fluide (5) sont formées dans le sommet des nervures, entre deux cannelures principales (11).

7. Système de revêtement selon la revendication 1, **caractérisé en ce que** des ouïes d'aération (15) sont formées dans des arêtes (17) bordant les cannelures.

8. Système de revêtement selon la revendication 1, **caractérisé en ce que** les éléments de recouvrement sont fixés par des éléments de fixation (102) sur le sommet (101) ou sur un flan amont (105) des nervures (10).

9. Système de revêtement selon la revendication 1, **caractérisé en ce que** les éléments de recouvrement sont maintenus par des crochets (18) engagés dans des orifices (19) formés dans des arêtes (17) bordant les cannelures ou vers le sommet des nervures.

10. Système de revêtement selon la revendication 1, **caractérisé en ce que** les panneaux (1) constituent les éléments de recouvrement, et sont fixés en façade ou en toiture d'un bâtiment, les conduits de fluide (5) étant situés du côté du panneau faisant face au bâtiment (7).

11. Système de revêtement selon la revendication 1, **caractérisé en ce que** les panneaux sont des lames allongées (1') comportant sur leurs bords latéraux des retours (11') pliés et conformés de manière à être jointifs l'un contre l'autre, ou sensiblement jointifs, lorsque les dites lames sont assemblées, lesdits retours constituant les nervures, et les conduits de fluide (5) sont placés dans des cannelures (11) formées sur certains au moins desdits retours.

12. Système de revêtement selon la revendication 1, **caractérisé en ce que** les cannelures (11) sont conformées de manière à enserrer les conduits (5).

13. Système selon la revendication 12, **caractérisé en ce que** les cannelures (11) sont conformées avec une ouverture (111) moins large que le diamètre extérieur des conduits, et les conduits (5) sont mis en place après avoir cintré temporairement les panneaux (1) pour provoquer un élargissement de l'ouverture (111) des cannelures (11) au moins égal au diamètre des conduits.

14. Panneau de support pour un système selon l'une quelconque des revendications précédentes, **caractérisé en ce qu'il** est réalisé en un matériau en feuille mince, notamment en tôle d'acier, et comporte des nervures (10) ayant un flan amont (105) perpendiculaire ou fortement incliné par rapport au plan général du panneau, et des cannelures principales (11) formées entre les dites nervures.

15. Panneau selon la revendication 12, **caractérisé en ce qu'il** comporte en plus des cannelures secondaires (12) formées dans le sommet des nervures (10), entre deux cannelures principales.
